# FASCICULE DE BREVET EUROPEEN

(11) **EP 2 832 634 B1**
(45) Date de publication et mention de la délivrance du brevet: **13.07.2016**
(21) Numéro de dépôt: 14179328.1
(22) Date de dépôt: 31.07.2014
(51) Int. Cl.: B64C 1/06

(54) **Elément de cadre de fuselage d'aéronef intégrant des languettes pour la fixation de raidisseurs**
Rumpfrahmenelement eines Luftfahrzeugs das Zungen zur Befestigung von Aussteifungselementen umfasst
Frame element of an aircraft fuselage including tabs for attaching stiffeners

(30) Priorité: 01.08.2013 FR 1357676
(43) Date de publication de la demande: 04.02.2015
(73) Titulaire: AIRBUS OPERATIONS (SAS), 31060 Toulouse (FR)
(72) Inventeur: Marin, Yannick, 32600 l'ISLE JOURDAIN (FR); Guilloteau, Damien, 31000 TOULOUSE (FR); Luche, Emilie, 32600 LIAS (FR)
(74) Mandataire: Brevalex

(56) Documents cités:
- EP-A1- 2 565 117
- WO-A2-2010/118448
- DE-A1-102006 051 457
- DE-A1-102009 056 999
- FR-A- 1 345 076
- JP-A- H04 334 696

## Description

### DOMAINE TECHNIQUE

La présente invention se rapporte au domaine des fuselages d'aéronef, et en particulier à celui de la fixation d'un élément de cadre de fuselage sur des raidisseurs équipant la peau de ce fuselage.

L'invention s'applique plus particulièrement, mais non exclusivement, au domaine des avions commerciaux.

### ETAT DE LA TECHNIQUE ANTERIEURE

Les fuselages d'aéronefs sont conçus pour résister aux charges induites par la pressurisation et aux charges transmises par les moteurs.

A cet effet, les fuselages comprennent habituellement des cadres s'étendant circonférentiellement, également dénommés « cadres orbitaux », ainsi qu'une peau aérodynamique, parfois dénommée « peau auto-raidie », fixée sur ces cadres circonférentiels et munie de raidisseurs s'étendant habituellement longitudinalement, qui sont fixés sur une face intérieure de la peau et qui sont généralement dénommés « lisses ».

Les lisses peuvent présenter des sections de types variés, par exemple en T, en I, en J ou en Ω. Dans certaines configurations connues, les cadres circonférentiels présentent une semelle directement fixée sur la face intérieure de la peau auto-raidie, auquel cas les cadres comportent des encoches/ouvertures pour le passage des lisses. Dans d'autres configurations connues, les lisses sont interposées entre les cadres circonférentiels et la peau auto-raidie, les cadres passant alors au-dessus des lisses.

Dans les deux cas, et en particulier dans le dernier cas, des cornières couramment dénommées « *clips »* sont agencées entre les lisses, et assurent la liaison des cadres circonférentiels à la peau et/ou aux raidisseurs longitudinaux.

Néanmoins, les clips sont mis en place sur le cadre et fixés les uns après les autres. Ce traitement individuel de chaque clip rend le processus d'assemblage coûteux, d'autant que le nombre de clips associés à chaque cadre de fuselage est très important. De plus, cette phase de fabrication du fuselage nécessite généralement la présence de nombreux opérateurs à l'intérieur du tronçon de fuselage concerné, en raison du nombre important de clips de fixation. Par conséquent, il peut s'avérer difficile d'accomplir simultanément d'autres tâches d'assemblage depuis l'intérieur du tronçon lorsque les opérateurs posent et fixent ces clips, ce qui constitue un autre facteur de pénalisation des temps et coûts de fabrication.

Il existe donc un besoin d'optimisation de cette phase de mise en place et de fixation des clips, afin de limiter son impact sur le coût global de fabrication du fuselage.

Un fuselage comprenant des éléments de cadre est connu du document JP 04334696, qui est considéré comme l'art antérieur le plus proche et décrit les caractéristiques du préambule de la revendication 1.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un élément de cadre de fuselage d'aéronef tel que défini dans la revendication 1.

L'invention rompt avec la technique actuelle basée sur l'utilisation de clips fixés par rivetage à l'élément de cadre, puisque ce dernier intègre des languettes remplissant une fonction analogue. Aussi, en étant déjà intégrées à l'élément de cadre, ces languettes facilitent la fabrication du fuselage, dont les temps et coûts de fabrication sont avantageusement réduits.

Il en découle une rationalisation des opérations, avec en particulier la suppression de l'étape de fixation des clips sur l'élément de cadre de fuselage. D'ailleurs, une fois l'élément de cadre mis en place sur les autres éléments de fuselage, ces languettes peuvent être fixées simplement et rapidement, ce qui limite le nombre d'opérateurs devant intervenir au sein du fuselage. D'autres opérations d'assemblage peuvent ainsi être conduites simultanément dans le tronçon de fuselage concerné, avec pour conséquence une réduction du temps et du coût global de fabrication du fuselage. Cet avantage est encore plus prononcé lorsqu'une telle opération de fixation des languettes est automatisée, par exemple à l'aide de robots.

L'invention présente de manière préférentielle l'une ou plusieurs des caractéristiques optionnelles décrites ci-dessous.

Chaque ouverture est réalisée débouchante selon une direction de la hauteur dudit élément de cadre, ladite pliure formant le fond de l'ouverture et étant opposée à une partie débouchante de cette ouverture, agencée au niveau d'une semelle de l'élément de cadre.

Ladite languette est inclinée d'un angle d'environ 90° par rapport à l'âme.

L'élément de cadre de fuselage présente une section en forme générale de C, S, Z, I, J, L, T ou Ω. Bien entendu, il s'agit de la section dans les parties de l'élément de cadre non pourvues de languettes.

L'élément de cadre de fuselage comprend plusieurs ouvertures espacées les unes des autres selon une direction longitudinale de l'élément de cadre, une languette étant associée à chacune des ouvertures.

L'élément de cadre de fuselage est réalisé à l'aide d'un matériau thermodurcissable ou thermoplastique, préférentiellement en matériau composite comprenant un mélange de résine et de fibres.

Ladite languette est réalisée par pliage d'une partie partiellement détourée au sein de l'élément de cadre.

L'élément de cadre de fuselage s'étend sur un secteur angulaire de l'ordre de 30 à 120°. D'autres étendues angulaires restent possibles, sans sortir du cadre de l'invention.

Le stabilisateur prend la forme d'un renfort de section en forme de L, avec de préférence une nervure triangulaire reliant la base et la branche du L. Ici, la base et la branche du L sont respectivement destinées à être plaquées et fixées sur l'âme du cadre et la languette, ou inversement.

L'invention a également pour objet un assemblage pour fuselage d'aéronef comprenant au moins un raidisseur ainsi qu'au moins un élément de cadre de fuselage tel que décrit ci-dessus, ledit raidisseur traversant l'ouverture de l'élément de cadre et étant fixé à celui-ci à l'aide de ladite languette plaquée contre le raidisseur.

De préférence, ladite languette est fixée au raidisseur par rivets, boulons, soudures, collage, ou polymérisation de la languette au contact du raidisseur.

De préférence, l'assemblage comporte de plus un stabilisateur reliant la languette et l'âme de l'élément de cadre de fuselage.

L'invention a également pour objet un fuselage d'aéronef comprenant au moins un assemblage tel que décrit ci-dessus, ainsi qu'une peau de fuselage sur laquelle est fixé chaque raidisseur de l'assemblage.

L'invention a aussi pour objet un aéronef comprenant un tel fuselage.

Enfin, l'invention a également pour objet un procédé de fabrication d'un élément de cadre de fuselage d'aéronef tel que décrit ci-dessus, le procédé comprenant les étapes suivantes :
- réalisation d'entailles à travers l'élément de cadre de fuselage après fabrication de celui-ci ou au cours de sa fabrication, de manière à obtenir au moins une partie partiellement détourée située entre deux entailles ;
- pliage de ladite partie partiellement détourée de manière à libérer ladite ouverture et former ladite languette.

De préférence, le procédé comporte également une étape visant à retirer, au moins en partie, une portion de la partie partiellement détourée située au niveau d'une semelle de l'élément de cadre. Ce retrait s'effectue de préférence par découpe de la partie préférentiellement détourée. Ce retrait peut être effectué à différents stades de la mise en oeuvre du procédé de fabrication.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un aéronef comprenant un fuselage d'aéronef selon l'invention ;
- la figure 2 montre une vue agrandie d'une partie du fuselage montré sur la figure précédente, vue depuis l'intérieur de l'aéronef ;
- la figure 3 représente une vue en perspective d'un assemblage faisant partie intégrante du fuselage montré sur les figures précédentes, cet assemblage comprenant un élément de cadre de fuselage fixé à un raidisseur ;
- la figure 4 représente une vue en perspective de l'élément de cadre de fuselage montré sur la figure précédente;
- la figure 5 représente une vue en coupe selon la ligne V-V de la figure 4
- la figure 6 représente une vue analogue à celle de la figure 4, et montrant l'une des particularités de l'invention ; et
- les figures 7a à 7c représentent schématiquement différentes étapes d'un procédé de fabrication de l'élément de cadre de fuselage montré sur les figures 3 à 5, selon un mode de réalisation préféré de l'invention.

### EXPOSÉ DÉTAILLÉ DE MODES DE RÉALISATION PRÉFÉRÉS

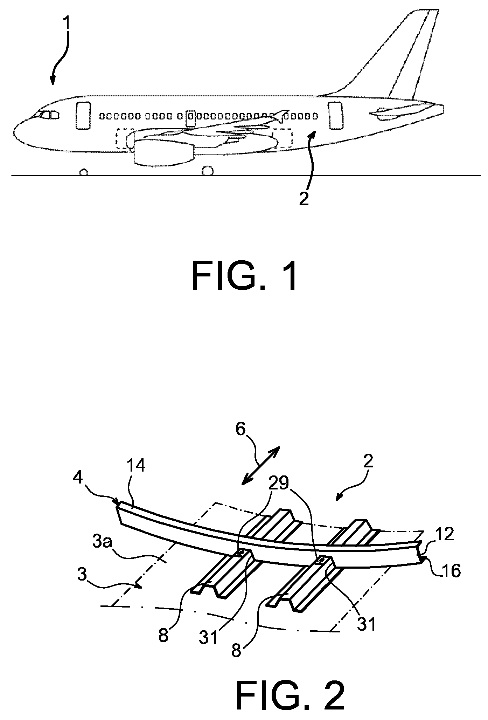

En référence tout d'abord à la figure 1, il est représenté un avion commercial 1 équipé d'un fuselage 2, dont une partie est montrée de façon plus détaillée sur la figure 2, cette partie de fuselage 2 étant vue depuis l'intérieur de l'avion.

Le fuselage 2 comprend une peau 3 dont la face intérieure 3a porte fixement des cadres de fuselage 4, dont seul l'un d'entre eux a été représenté sur la figure 2. Ce cadre 4 s'étend sur toute ou partie de la périphérie du fuselage, dans un plan transversal de l'aéronef, c'est-à-dire un plan orthogonal à la direction 6 correspondant à la direction longitudinale et axiale de l'avion. Chaque cadre peut être réalisé d'une seule pièce, ou formé à l'aide de plusieurs éléments/tronçons de cadre ne formant chacun qu'un unique secteur angulaire du cadre, ces éléments étant alors assemblés bout-à-bout. Typiquement, un élément de cadre s'étend sur un secteur angulaire de l'ordre de 30 à 120°. Par commodité, dans la suite de la description, l'élément de cadre visible sur la figure 2 et sur les figures suivantes sera dénommé « cadre 4 ». Il est cependant noté que les autres éléments de cadre constituant le cadre présentent une conception identique ou similaire à celle qui sera présentée ci-dessous, et qui est propre à la présente invention.

Par ailleurs, le fuselage 2 comprend une pluralité de lisses longitudinales 8 qui sont des raidisseurs, prenant la forme de renforts passant à travers les cadres 4. Toutes les lisses 8 s'étendant selon la direction longitudinale 6 sont fixées à la face intérieure 3a de la peau, par des moyens conventionnels, tels que des rivets. Les lisses 8 présentent ici une section transversale en forme globale de Ω, mais pourraient avoir d'autres formes connues de l'homme du métier.

Chaque cadre 4 comprend une âme 12 qui est la partie verticale centrale montrée sur la figure 2, à l'extrémité de laquelle se trouve le talon 14, et à l'autre extrémité de laquelle se situe la semelle 16. De manière conventionnelle, l'âme reliant le talon et la semelle s'apparente à la partie centrale du raidisseur. Ici, la semelle 16 est destinée à être en regard de la peau 3, éventuellement au contact de celle-ci, et éventuellement fixée à cette même peau. Cependant, il est de préférence retenu une solution dans laquelle la semelle 16 n'est pas directement fixée à la peau 3, la fixation des cadres 4 à cette peau s'effectuant seulement indirectement via leur fixation aux lisses 8, qui sont elles-mêmes directement fixées à la peau.

Le talon 14 constitue quant à lui l'extrémité libre du raidisseur, opposée à l'extrémité formée par la semelle.

Dans le mode de réalisation représenté, la section du cadre 4 présente une forme générale de « C » avec l'âme 12 sensiblement perpendiculaire au talon 14 et à la semelle 16, formant respectivement les extrémités opposées du cadre. Néanmoins, des angles différents de 90° peuvent être retenus pour certains cadres 4, en particulier pour ceux situés en pointe avant et en pointe arrière de l'aéronef. D'autres formes générales de section sont cependant possibles, par exemple en I, Ω, etc. Des sections creuses sont aussi envisageables, sans sortir du cadre de l'invention.

Comme évoqué ci-dessus, le fuselage 2 ne comprend pas de clips de fixation conventionnels, habituellement destinés à assurer la fixation des cadres de fuselage 4 sur la peau 3 et/ou sur les lisses 8 équipant la peau.

En revanche, l'élément de cadre 4 intègre des languettes 29 pour la fixation des lisses 8 qui le traversent au niveau d'ouvertures 31 libérées par ces languettes.

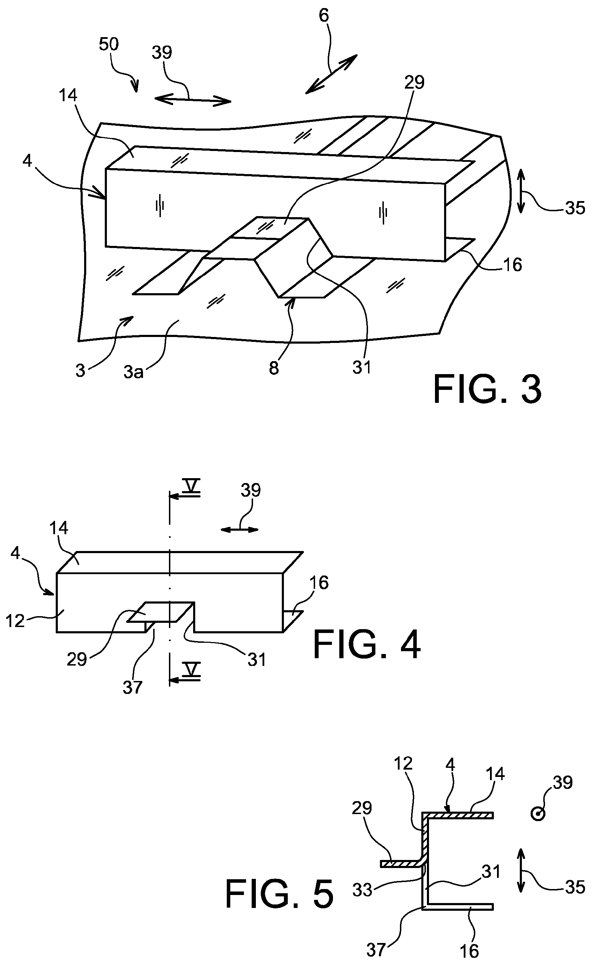

Plus précisément en référence aux figures 3 à 5, le cadre 4 comprend donc, associée à chaque ouverture traversante 31, une languette 29 pour la fixation de ce cadre sur la lisse 8 traversant l'ouverture 31. Celle-ci est réalisée d'un seul tenant avec l'âme 12 et reliée à celle-ci par une pliure 33 délimitant l'ouverture, en formant un fond de cette même ouverture. L'ouverture 31 est ainsi réalisée débouchante selon une direction 35 de la hauteur du cadre, avec la pliure 33 formant le fond de l'ouverture et étant opposée à une partie débouchante 37 agencée au niveau de la semelle 16.

La languette 29 est sensiblement plane, inclinée d'environ 90° par rapport à l'âme 12. Comme cela sera décrit ci-après, l'une des particularités de l'invention réside dans le fait que la languette est réalisée par pliage d'une partie partiellement détourée au sein de l'élément de cadre.

De plus, il est noté que le cadre 4 comprend plusieurs ouvertures 31 espacées les unes des autres selon la direction longitudinale 39 de ce cadre. Une ouverture 31 est en fait prévue pour le passage de chaque lisse 8, fixée au cadre par l'intermédiaire de la languette 29 associée à cette ouverture. Le cadre 4 et chaque lisse 8 fixée à ce dernier forment ensemble un assemblage 50 propre à l'invention, destiné à faire partie intégrante du fuselage 2.

Dans ce mode de réalisation, la languette 29 est donc fixée sur la tête du raidisseur 8, mais la semelle 16 pourrait également être fixée aux pieds de ce même raidisseur 8 contre lesquels cette semelle est en appui. La fixation s'effectuerait d'une manière analogue, par rivets ou similaires. Aussi, dans les portions situées entre les raidisseurs, le cadre 4 n'est pas relié à la peau 3, et un jeu est même préférentiellement prévu entre la face intérieure de la peau 3a et la semelle 16. Ce jeu est de préférence sensiblement identique à l'épaisseur des pieds des raidisseurs 8, contre lesquels la semelle 16 est en appui.

Le cadre 4 est de préférence réalisé à l'aide d'un matériau thermodurcissable ou thermoplastique, en particulier un matériau composite comprenant un mélange de résine et de fibres, de préférence des fibres de carbone et/ou de verre.

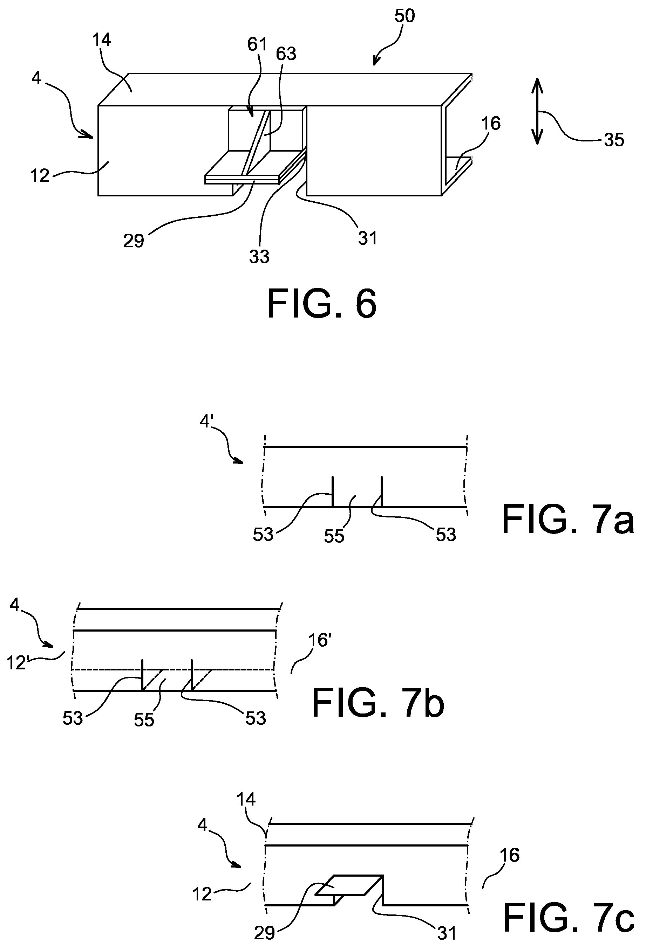

A cet égard, les figures 7a à 7c schématisent différentes étapes d'un procédé de fabrication d'un tel cadre 4, réalisé en matériau composite.

Tout d'abord en référence à la figure 7a, un ensemble de plis imprégnés 4' est empilé, puis des entailles 53 sont réalisées à travers cet empilement de façon à obtenir une partie partiellement détourée 55 entre deux entailles.

Ensuite, comme montré sur la figure 7b, l'empilement est mis en forme de manière à présenter une section en forme générale de C sensiblement identique à la section finale désirée pour le cadre 4. Aussi, les entailles 53 et la partie partiellement détourée s'étendent au niveau de la partie 12' de l'empilement destinée à former l'âme du cadre, mais également au niveau de la partie 16' de l'empilement destinée à former la semelle.

Il est ensuite prévu une étape de polymérisation de la résine, au cours de laquelle le cadre 4 est obtenu en durcissant sous l'effet de la chaleur. Cette étape de polymérisation est classique, et peut être mise en oeuvre par tout moyen connu de l'homme du métier.

Ensuite, il est réalisé un pliage à 90° de la partie partiellement détourée, de manière à ce qu'elle forme la languette 29, comme cela est montré sur la figure 7c. C'est également durant ce pliage que l'ouverture traversante 31 se libère.

Pour la formation de la languette 29, la portion de la partie partiellement détourée située au niveau de la semelle peut être retirée après le pliage ou avant celui-ci. Elle peut également être retirée après ou avant la polymérisation, et, dans ce dernier cas, avant ou après la mise en forme de l'empilement visant à lui conférer une forme générale de C. Néanmoins, s'il est préférentiellement prévu que la longueur de la languette corresponde à la hauteur de l'ouverture débouchante dans l'âme du cadre, la longueur de cette languette pourrait être supérieure, en fonction de l'étendue du retrait opéré au niveau de la semelle du cadre.

Une fois le cadre 4 obtenu avec le procédé qui vient d'être décrit, il est préférentiellement amené à l'intérieur du tronçon de fuselage et mis en place sur les lisses 8 déjà fixées à la peau 3. Lors de cette mise en place, les têtes des lisses 8 sont donc insérées dans les ouvertures 31, et les languettes 29 plaquées contre ces mêmes têtes. Il suffit alors de procéder à la fixation de ces languettes 29 sur les têtes de lisses, de préférence de manière automatisée, par exemple avec des robots. Cela réduit considérablement le temps de mise en oeuvre de cette étape de fixation du cadre sur les lisses. Une opération analogue peut être mise en oeuvre pour l'éventuelle fixation de la semelle 16 sur les pieds des lisses 8.

Aucune opération de fixation de clips sur le cadre n'étant requise, l'invention réduit les temps et coûts de fabrication du fuselage. Ce dernier peut en effet faire l'objet d'autres tâches d'assemblage lorsque les cadres sont fabriqués extérieurement au tronçon. De plus, grâce à un encombrement réduit des robots, d'autres tâches d'assemblage peuvent être effectuées à l'intérieur du tronçon durant la fixation des languettes sur les lisses. Quoi qu'il en soit, le nombre de fixations étant réduit, il en est de même pour le nombre d'opérateurs / robots présents au sein du tronçon pour assurer le montage des cadres sur les lisses. Par conséquent, d'autres tâches peuvent être réalisées simultanément au sein de ce tronçon, pour réduire encore davantage le temps et le coût de fabrication de ce fuselage.

En outre, l'invention est aussi avantageuse en ce que la matière retirée pour la formation des ouvertures de passage de lisses est judicieusement conservée pour former des moyens de fixation du cadre sur ces lisses. Cela confère un gain de matière, puisque dans les solutions de l'art antérieur, cette matière retirée était simplement jetée, sans être fonctionnalisée, et en particulier non destinée à former tout ou partie des clips de fixation.

Pour la fixation des languettes 29 sur les têtes de lisses 8, il peut être envisagé des moyens de fixation conventionnels tels que des rivets, des boulons, ou encore une colle comme par exemple une colle thermodurcissable interposée entre les deux éléments déjà durcis.

Alternativement, il peut être envisagé la polymérisation des languettes 29 lorsqu'elles sont placées au contact des têtes de lisses 8. Pour ce faire, la polymérisation initiale du cadre 4 devrait être mise en oeuvre sans concerner les languettes 29, durcies alors seulement ultérieurement. Dans ce cas de figure, l'adhérence aux lisses résulterait de la polymérisation des languettes agencées au contact des têtes de lisses 8.

Une autre possibilité réside dans la mise en oeuvre d'une étape de copolymérisation de plusieurs cadres 4 et lisses 8, en les plaçant dans un même outillage.

Bien entendu, les différentes techniques de fixation évoquées ci-dessus peuvent être combinées entre elles.

La technique préférée sera la copolymérisation de plusieurs cadres, des languettes et des éléments raidisseurs et de la peau, le tout dans un même et unique moule, ou bien une technique en deux étapes par soudage local de chaque languette sur son raidisseur associé préalablement polymérisé. Lorsque le cadre est réalisé dans un matériau thermoplastique, des possibilités de fixation identiques ou analogues sont offertes. Une autre possibilité réside néanmoins dans la soudure des languettes thermoplastiques sur les têtes de lisses, de préférence également réalisées dans un matériau thermoplastique. Ici, les languettes sont découpées puis pliées après la fabrication du cadre.

Plus généralement, il peut être prévu tout procédé visant à la réalisation d'entailles à travers le cadre 4 après la fabrication de celui-ci ou au cours de sa fabrication, par exemple avant sa mise en forme et/ou avant sa polymérisation pour le cas d'un matériau thermodurcissable, de manière à obtenir au moins une partie

partiellement détourée située entre deux entailles. Ensuite, il est procédé au pliage de la partie partiellement détourée, de manière à libérer l'ouverture et former la languette, comme cela a été décrit ci-dessus. Le pliage peut aussi s'effectuer au cours ou après la fabrication du cadre.

En référence à la figure 6, il est représenté l'une des particularités de l'invention dans laquelle l'assemblage 50 comporte de plus un stabilisateur 61 reliant la languette 29 et l'âme 12 du cadre 4. Le stabilisateur 61 peut prendre la forme d'un renfort de section en forme de L, avec une nervure triangulaire reliant la base et la branche du L. La base du L est donc plaquée et fixée contre la languette 29, tandis que sa branche est plaquée et fixée contre l'âme 12. Il est noté que la nervure triangulaire 63 a été représentée centrée sur le L, mais qu'elle pourrait alternativement être excentrée, par exemple de manière à former un coin de malle ou similaire avec le L. Le stabilisateur 61 vient renforcer le maintien mécanique du cadre 4 sur la lisse 8, déjà assuré par la fixation de la languette 29 sur la tête de lisse. D'ailleurs, il est noté que des moyens de fixation du type rivets peuvent traverser successivement le stabilisateur 61, la languette 29 et la tête de lisse 8.

Bien entendu, diverses modifications peuvent être apportées par l'homme du métier à l'invention qui vient d'être décrite, uniquement à titre d'exemples non limitatifs.

## Revendications

1. Elément (4) de cadre de fuselage d'aéronef comprenant une âme (12) pourvue d'au moins une ouverture traversante (31) destinée au passage d'un raidisseur de fuselage (8), ledit élément comprend, associée à chaque ouverture, une languette (29) pour la fixation de l'élément de cadre sur le raidisseur de fuselage, ladite languette étant réalisée d'un seul tenant avec l'âme (12) et reliée à celle-ci par une pliure (33) délimitant ladite ouverture (31), ladite languette (29) étant en outre réalisée par pliage d'une partie partiellement détourée au sein de l'élément de cadre, **caractérisé en ce qu'**il comporte de plus un stabilisateur (61) reliant la languette (29) et l'âme (12).

2. Elément de cadre de fuselage selon la revendication 1, **caractérisé en ce que** chaque ouverture (31) est réalisée débouchante selon une direction (35) de la hauteur dudit élément de cadre, ladite pliure (33) formant le fond de l'ouverture et étant opposée à une partie débouchante (37) de cette ouverture, agencée au niveau d'une semelle (16) de l'élément de cadre (4).

3. Elément de cadre de fuselage selon la revendication 1 ou la revendication 2, **caractérisé en ce que** ladite languette (29) est inclinée d'un angle d'environ 90° par rapport à l'âme (12).

4. Elément de cadre de fuselage selon l'une quelconque des revendications précédentes, **caractérisé en ce qu'**il présente une section en forme générale de C, S, Z, I, J, L, T ou Ω.

5. Elément de cadre de fuselage selon l'une quelconque des revendications précédentes, **caractérisé en ce qu'**il comprend plusieurs ouvertures (31) espacées les unes des autres selon une direction longitudinale (6) de l'élément de cadre, une languette (29) étant associée à chacune des ouvertures (31).

6. Elément de cadre de fuselage selon l'une quelconque des revendications précédentes, **caractérisé en ce qu'**il est réalisé à l'aide d'un matériau thermodurcissable ou thermoplastique, préférentiellement en matériau composite comprenant un mélange de résine et de fibres.

7. Elément de cadre de fuselage selon la revendication 6, **caractérisé en ce que** ledit stabilisateur (61) prend la forme d'un renfort de section en forme de L, avec de préférence une nervure triangulaire (63) reliant la base et la branche du L.

8. Assemblage (50) pour fuselage d'aéronef comprenant au moins un raidisseur (8) ainsi qu'au moins un élément de cadre de fuselage (4) selon l'une quelconque des revendications précédentes, ledit raidisseur (8) traversant l'ouverture (31) de l'élément de cadre et étant fixé à celui-ci à l'aide de ladite languette (29) plaquée contre le raidisseur.

9. Assemblage selon la revendication 8, **caractérisé en ce que** ladite languette (29) est fixée au raidisseur (8) par rivets, boulons, soudures, collage, ou polymérisation de la languette (29) au contact du raidisseur (8).

10. Fuselage (2) d'aéronef comprenant au moins un assemblage (50) selon l'une quelconque des revendications 8 et 9, ainsi qu'une peau de fuselage (3) sur laquelle est fixé chaque raidisseur (8) de l'assemblage.

11. Aéronef (1) comprenant un fuselage (2) selon la revendication précédente.

12. Procédé de fabrication d'un élément de cadre de fuselage d'aéronef (4) selon l'une quelconque des revendications 1 à 7, **caractérisé en ce qu'**il comprend les étapes suivantes :
- réalisation d'entailles (53) à travers l'élément de cadre de fuselage après fabrication de celui-ci ou au cours de sa fabrication, de manière à obtenir au moins une partie partiellement détourée (55) située entre deux entailles (53) ;
- pliage de ladite partie partiellement détourée (55) de manière à libérer ladite ouverture (31) et former ladite languette (29).

13. Procédé selon la revendication précédente, **caractérisé en ce qu'**il comporte également une étape visant à retirer, au moins en partie, une portion de la partie partiellement détourée située au niveau d'une semelle de l'élément de cadre.

## Patentansprüche

1. Rumpfrahmenelement (4) eines Luftfahrzeugs, welches ein Stegblech (12) aufweist, welches mit mindestens einer querverlaufenden Öffnung (31) versehen ist, welche für den Durchlass einer Rumpfversteifung (8) vorgesehen ist, wobei das Element eine, mit jeder Öffnung verknüpfte Zunge (29) für die Befestigung des Rahmenelements an der Rumpfversteifung aufweist, wobei die Zunge aus einem Stück mit dem Stegblech (12) ausgeführt und mit diesem durch eine Falz (33), welche die Öffnung (31) begrenzt, verbunden ist, wobei die Zunge (29) außerdem durch Faltung eines Abschnitts erzielt wird, welcher teilweise aus dem Inneren des Rahmenelements ausgeschnitten wurde, **dadurch gekennzeichnet, dass** es außerdem einen Stabilisator (61) aufweist, welcher die Zunge (29) mit dem Stegblech (12) verbindet.

2. Rumpfrahmenelement nach Anspruch 1, **dadurch gekennzeichnet, dass** jede Öffnung (31) gemäß einer Richtung (35) der Höhe des Rahmenelementes durchgehend ausgeführt ist, wobei die Falz (33), welche den Boden der Öffnung bildet und einem durchgehenden Abschnitt (37) dieser Öffnung gegenüber liegt, im Bereich eines Flansches (16) des Rahmenelements (4) eingerichtet ist.

3. Rumpfrahmenelement nach Anspruch 1 oder Anspruch 2, **dadurch gekennzeichnet, dass** die Zunge (29) um einen Winkel von ungefähr 90° in Bezug auf das Stegblech (12) geneigt ist.

4. Rumpfrahmenelement nach einem der vorhergehenden Ansprüche, **dadurch gekennzeichnet, dass** es einen im allgemeinen C-, S-, Z-, I-, J-, L-, T- oder Ω-förmige Querschnitt aufweist.

5. Rumpfrahmenelement nach einem der vorhergehenden Ansprüche, **dadurch gekennzeichnet, dass** es mehrere, gemäß einer longitudinalen Richtung (6) des Rahmenelementes voneinander beabstandete Öffnungen (31) aufweist, wobei eine Zunge (29) mit jeder der Öffnungen (31) verknüpft ist.

6. Rumpfrahmenelement nach einem der vorhergehenden Ansprüche, **dadurch gekennzeichnet, dass** es mittels eines wärmeaushärtenden oder thermoplastischen Materials, vorzugsweise aus einem, eine Mischung aus Harz und Fasern aufweisenden Verbundmaterial, ausgeführt ist.

7. Rumpfrahmenelement nach Anspruch 6, **dadurch gekennzeichnet, dass** der Stabilisator (61) die Form einer Verstärkung mit L-förmigem Querschnitt einnimmt, mit vorzugsweise einer dreieckigen Rippe (63), welche die Basis mit dem Schenkel des L verbindet.

8. Baugruppe (50) für einen Luftfahrzeugrumpf, welche mindestens eine Versteifung (8) sowie mindestens ein Rumpfrahmenelement (4) nach einem der vorhergehenden Ansprüche aufweist, wobei die Versteifung (8) die Öffnung (31) des Rahmenelements durchquert und an diesem mittels der gegen die Versteifung gepressten Zunge (29) befestigt ist.

9. Baugruppe nach Anspruch 8, **dadurch gekennzeichnet, dass** die Zunge (29) an der Versteifung (8) durch Nieten, Bolzen, Schweißnähte, Klebung oder Polymerisation der Zunge (29) an der Verbindung mit der Versteifung (8) befestigt ist.

10. Luftfahrzeugrumpf (2), welcher mindestens eine Baugruppe (50) nach einem der Ansprüche 8 und 9 sowie eine Rumpfhülle (3) aufweist, an welcher jede Versteifung (8) der Baugruppe befestigt ist.

11. Luftfahrzeug (1), welches einen Rumpf (2) nach dem vorhergehenden Anspruch aufweist.

12. Verfahren zur Herstellung eines Rumpfrahmenelements eines Luftfahrzeugs (4) nach einem der Ansprüche 1 bis 7, **dadurch gekennzeichnet, dass** es die folgenden Schritte aufweist:
Ausführen von Einschnitten (53) durch das Rumpfrahmenelement hindurch nach dessen Herstellung oder im Verlauf seiner Herstellung, so dass zumindest ein teilweise ausgeschnittener Abschnitt (55) erzielt wird, welcher zwischen zwei Einschnitten (53) angeordnet ist;
Falten des teilweise ausgeschnittenen Abschnitts (55), so dass die Öffnung (31) freigelegt wird und die Zunge (29) gebildet wird.

13. Verfahren nach dem vorhergehenden Anspruch, **dadurch gekennzeichnet, dass** es auch einen Schritt umfasst, welcher darauf abzielt, einen teilweise ausgeschnittenen, im Bereich eines Flansches des Rahmenelementes angeordneten Abschnitt zumindest zum Teil zurückzuziehen.

## Claims

1. Aircraft fuselage frame element (4) comprising a core (12) provided with at least one through-opening (31) intended for the passing of a fuselage stiffener (8), said element comprising, associated with each opening, a tab (29) for the fastening of the frame element onto the fuselage stiffener, said tab being carried out in a single piece with the core (12) and connected to the latter by a fold (33) that delimits said opening (31), said tab (29) being furthermore carried out by folding a partially cut-out portion within the frame element, **characterised in that** it further comprises a stabilizer (61) that connects the tab (29) and the core (12).

2. Fuselage frame element according to claim 1, **characterised in that** each opening (31) is carried out opening according to a direction (35) of the height of said frame element, with said fold (33) forming the bottom of the opening and being opposite an opening portion (37) of this opening, arranged on a footing (16) of the frame element (4).

3. Fuselage frame element according to claim 1 or to claim 2, **characterised in that** said tab (29) is inclined by an angle of approximately 90° in relation to the core (12).

4. Fuselage frame element as claimed in "any one of the preceding claims", **characterised in that** it has a section in the general shape of a C, S, Z, I, J, L, T or Ω.

5. Fuselage frame element as claimed in "any one of the preceding claims", **characterised in that** it comprises several openings (31) spaced apart according to a longitudinal direction (6) of the frame element, a tab (29) associated with each of the openings (31).

6. Fuselage frame element as claimed in "any one of the preceding claims", **characterised in that** it is carried out using a thermosetting or thermoplastic material, preferably of composite material comprising a mixture of resin and fibres.

7. Fuselage frame element according to claim 6, **characterised in that** said stabilizer (61) takes the form of a section reinforcement in the shape of an L, with preferably a triangular rib (63) that connects the base and the branch of the L.

8. Assembly (50) for aircraft fuselage comprising at least one stiffener (8) as well as least one fuselage frame element (4) as claimed in "any one of the preceding claims", said stiffener (8) passing through the opening (31) of the frame element and being fastened to the latter using said tab (29) thrust against the stiffener.

9. Assemblage according to claim 8, **characterised in that** said tab (29) is fastened to the stiffener (8) by rivets, bolts, welds, gluing, or polymerisation of the tab (29) in contact with the stiffener (8).

10. Aircraft fuselage (2) comprising at least one assembly (50) according to claim 8 or to claim 9, as well as a fuselage skin (3) whereon is fastened each stiffener (8) of the assembly.

11. Aircraft (1) comprising a fuselage (2) as claimed in the preceding claim.

12. Method for manufacturing an aircraft fuselage frame element (4) according to any one of preceding claims 1 to 7, **characterised in that** it comprises the following steps:
- carrying out of notches (53) through the fuselage frame element after manufacture of the latter or during its manufacture, in such a way as to obtain at least one partially cut-out portion (55) located between two notches (53);
- folding of said partially cut-out portion (55) in such a way as to release said opening (31) and form said tab (29).

13. Method as claimed in the preceding claim, **characterised in that** it further comprises a step that aims to remove, at least partially, a portion of the partially cut-out portion located on a footing of the frame element.
